# EUROPEAN PATENT APPLICATION

(11) **EP 4 622 204 A1**
(43) Date of publication of application: **24.09.2025**
(21) Application number: 23892034.2
(22) Date of filing: 16.11.2023
(51) Int. Cl.: H04L 27/26, H04W 52/02, H04L 69/24, H04W 84/12

(54) **METHOD AND DEVICE FOR TRANSMITTING AND RECEIVING DATA ON BASIS OF P2P METHOD IN WIRELESS LAN SYSTEM**

(30) Priority: 17.11.2022 KR 20220154670
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Mooser, Sebastian Thomas
(86) International application number: PCT/KR2023/018445
(87) International publication number: WO 2024/106971

(57) **Abstract**

A method and a device for operating in a wireless LAN system are disclosed. The method performed by a first STA in a wireless LAN system according to one embodiment of the present disclosure comprises the operations of: transmitting, to an access point (AP), a first frame including a first field for requesting peer-to-peer (P2P) data communication within a restricted-target wake time (r-TWT); receiving, from the AP, a second frame including first information related to a time for P2P data communication; and performing the P2P data communication with a second STA for a time allocated by means of the first information, wherein the time allocated by means of the first information may be within an r-TWT service period (SP).

## Description

### [TECHNICAL FIELD]

The present disclosure relates to a communication operation in a Wireless Local Area Network (WLAN) system, and more specifically, to a method and device for transmitting and receiving data based on a P2P (peer-to-peer) method within a low-latency traffic transmission time in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting and receiving data based on a P2P method within a low-latency traffic transmission time in a wireless LAN system.

The technical problem of the present disclosure is to provide a method and device for requesting and responding to a time for transmitting delay-sensitive traffic in a P2P method in a wireless LAN system.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include transmitting a first frame including a first field for requesting peer-to-peer (P2P) data communication within a restricted-target wake time (r-TWT) to an access point (AP); receiving a second frame including first information related to a time for P2P data communication from the AP; and performing the P2P data communication with a second STA during a time allocated by the first information, and the time allocated by the first information may be within a r-TWT service period (SP).

According to another embodiment of the present disclosure, a method performed by an access point (AP) in a wireless LAN system may include receiving a first frame including a first field for requesting peer-to-peer (P2P) data communication within a restricted-target wake time (r-TWT) from a first station (STA); transmitting a second frame including first information related to a time for P2P data communication to the first STA; and performing communication with the first STA within an r-TWT service period (SP) after the time for P2P data communication has elapsed, and a time allocated by the first information may be within a r-TWT service period (SP).

### [Technical Effects]

According to various embodiments of the present disclosure, a method and device for transmitting and receiving data based on a P2P scheme within a low-latency traffic transmission time in a wireless LAN system may be provided.

According to various embodiments of the present disclosure, a method and device for requesting and responding to a time for transmitting delay-sensitive traffic in a P2P scheme in a wireless LAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing an example of an individual TWT operation to which the present disclosure may be applied.
FIG. 9 is a diagram for describing an example of a broadcast TWT operation to which the present disclosure can be applied.
FIG. 10 is a diagram for describing an example of a TWT information element format.
FIG. 11 is a diagram for describing examples of an individual TWT parameter set field format.
FIG. 12 is a diagram for describing examples of a broadcast TWT parameter set field format.
FIG. 13 is a diagram for describing examples of a field format related to a restricted TWT operation.
FIG. 14 is a flowchart for describing an operation of a first STA according to an embodiment of the present disclosure.
FIG. 15 is a diagram for describing an operation of an AP according to an embodiment of the present disclosure.
FIG. 16 is a diagram for describing a method for allocating time for P2P data transmission within an r-TWT SP according to an embodiment of the present disclosure.
FIG. 17 is a diagram for describing a field for allocating time for P2P data transmission within an r-TWT SP according to one embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

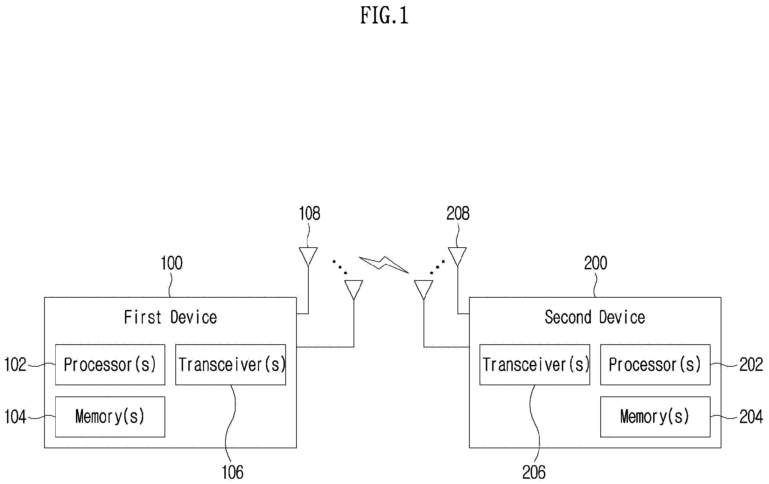

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decodin g/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

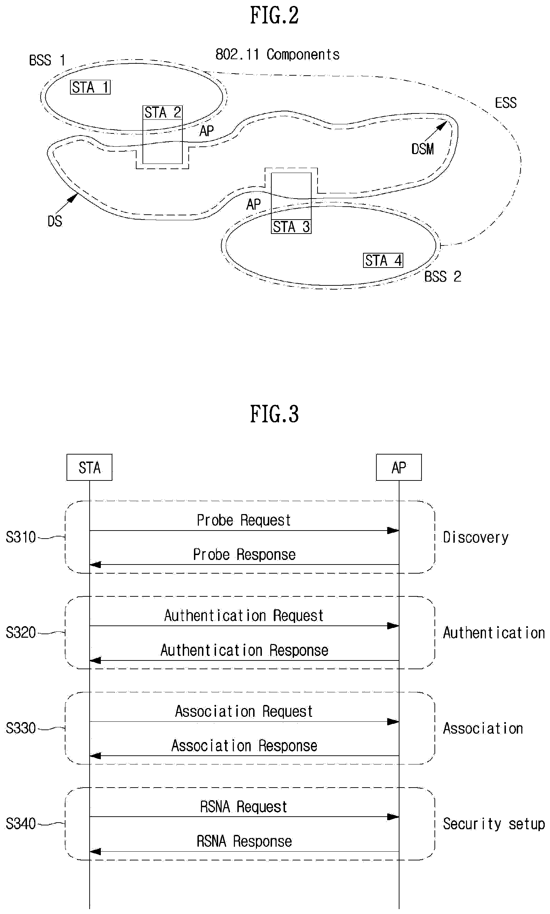

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

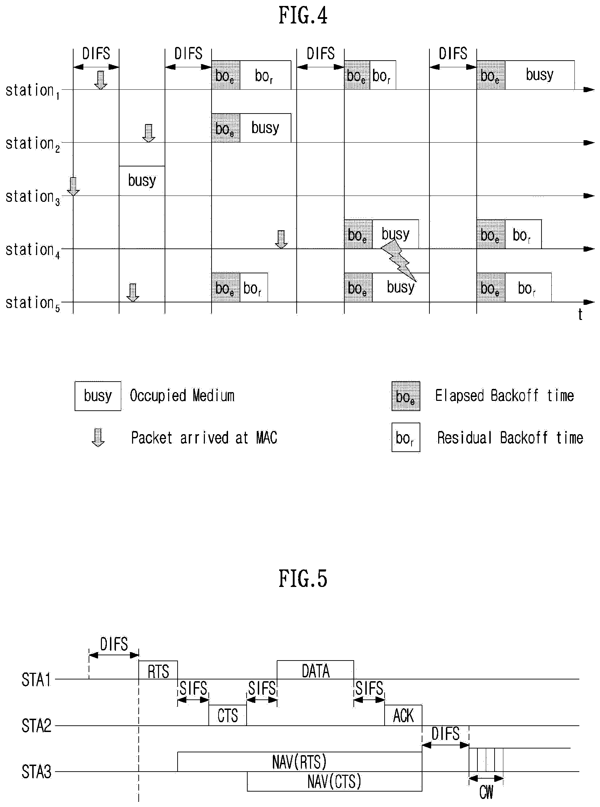

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

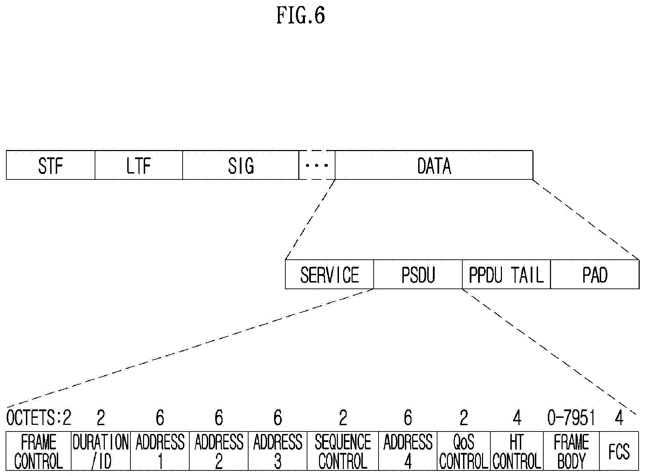

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

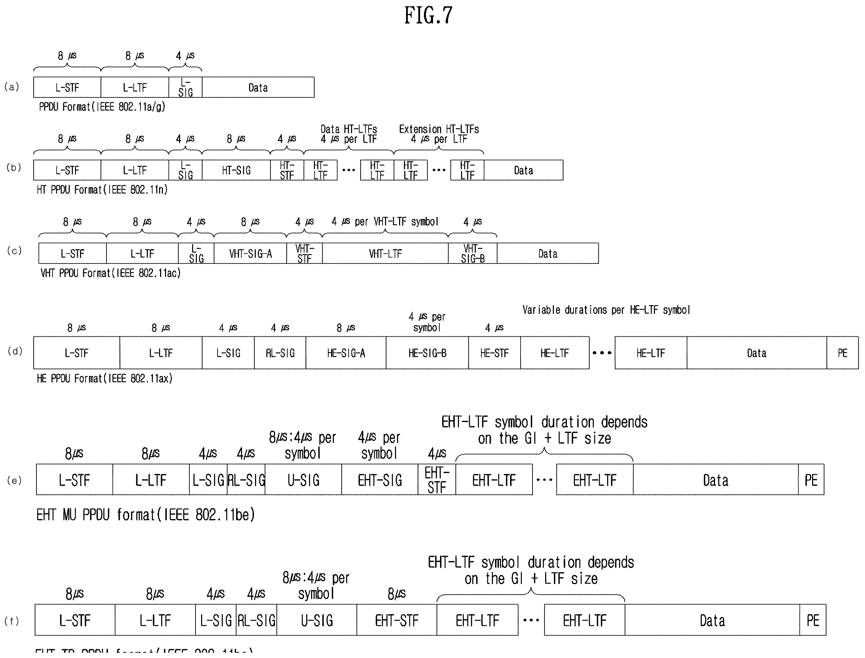

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target wake time (TWT)

TWT is a PS (Power Saving) technology that can improve the energy efficiency of non-AP STAs by defining the service period (SP) between AP and non-AP STAs and sharing information about SPs to reduce medium contention.

An STA that performs a request/suggest/demand, etc. in the TWT setup stage may be referred to as a TWT requesting STA. Additionally, the AP that responds, such as Accept/Reject, to the request may be referred to as a TWT responding STA.

The setup step may include the process of determining/defining the STA's TWT request to the AP, the type of TWT operation performed, and the type of frame to be transmitted and received. TWT operation can be divided into individual TWT and broadcast TWT.

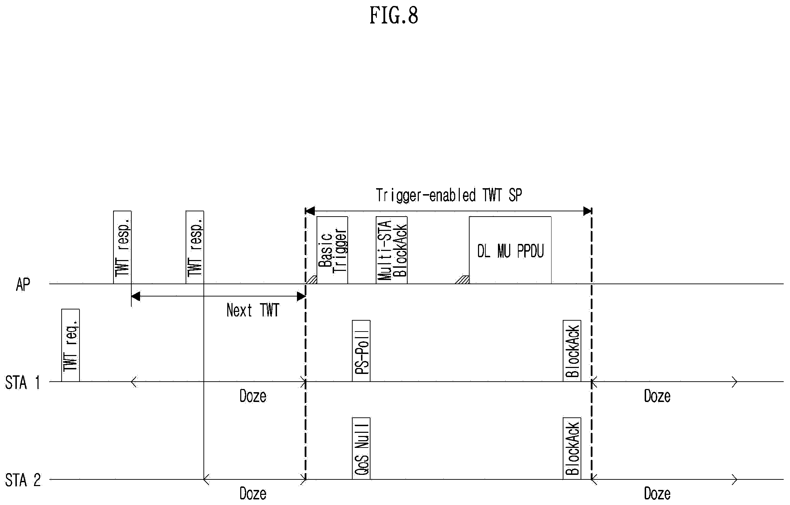

FIG. 8 is a diagram for describing an example of an individual TWT operation to which the present disclosure may be applied.

Individual TWT is a mechanism in which an AP and a non-AP STA negotiate the awake/doze state of the non-AP STA through transmission and reception of TWT request/response frames, and then exchange data.

In the example of FIG. 8, AP and STA 1 may form a trigger-enabled TWT agreement through a TWT request frame and a TWT response frame.

Here, the method used by STA 1 is a solicited TWT method. When STA 1 transmits a TWT request frame to the AP, STA 1 receives information for TWT operation from the AP through a TWT response frame.

On the other hand, STA 2, which performs the unsolicited TWT method, may receive information about trigger-enabled TWT agreement configurations from the AP through an unsolicited TWT response.

Specifically, STA 2 may calculate the next TWT by adding a specific number from the current TWT value. During a trigger-enabled TWT SP, the AP may transmit a trigger frame to STAs. The trigger frame may inform STAs that the AP has buffered data. In response to this, STA 1 may inform the AP of its awake state by transmitting a PS-Poll frame. Additionally, STA 2 may notify the AP of its awake state by transmitting a QoS Null frame. Here, the data frames transmitted by STA 1 and STA 2 may be frames in TB PPDU format. The AP that has confirmed the state of STA 1 and STA 2 may transmit a DL MU PPDU to the awake STAs. When the corresponding TWT SP expires, STA 1 and STA 2 may switch to the doze state.

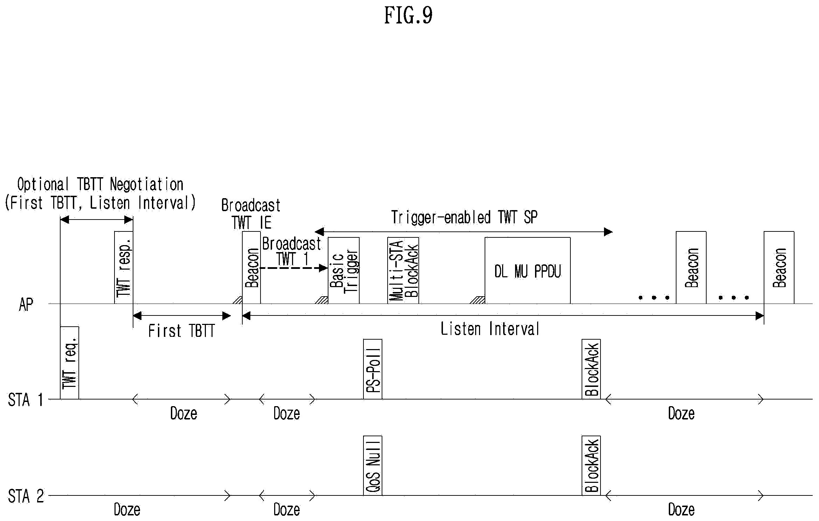

FIG. 9 is a diagram for describing an example of a broadcast TWT operation to which the present disclosure may be applied.

Broadcast TWT is a type of TWT in which a non-AP STA (or TWT scheduling STA) acquires information about target beacon transmission time (TBTT) and listening interval by transmitting and receiving TWT request/response frames with the AP (or TWT scheduled STA). Here, a negotiation operation for TBTT may be performed. Based on this, the AP may define a frame that will contain TWT scheduling information through a beacon frame.

In FIG. 9, STA 1 performs a solicited TWT operation, and STA 2 performs an unsolicited TWT operation. The AP may transmit the DL MU PPDU after checking the awake state of the STAs through the trigger transmitted by the AP. This may be the same as the process for individual TWT. In broadcast TWT, the trigger-enabled TWT SP, including the beacon frame, may be repeated several times at regular intervals.

Transmission of TWT information may be accomplished through a TWT information frame and a TWT information element. The TWT information frame is transmitted by an STA to request or convey information about the TWT agreement, and is transmitted by one of the STAs in the existing TWT agreement. The action field of the TWT Information frame includes a TWT information field.

The TWT Information field may include a 3-bit TWT flow identifier subfield, a 1-bit response requested subfield, a 1-bit next TWT request subfield, a 2-bit next TWT subfield size subfield, 1-bit all TWT subfield, and 0/32/48/64-bit next TWT subfield.

Here, the TWT flow identifier subfield may be used to identify the flow for which TWT information is requested/provided.

The Response Request subfield may indicate whether the transmitter of a frame including a TWT Information field requests transmission of a TWT Information frame (to be transmitted in response to reception of that frame). To request the receiver not to transmit a TWT Information frame in response to reception of the frame, the Response Request subfield value may be set to 0. To request the receiver to transmit a TWT Information frame in response to reception of the frame, the Response Request subfield value may be set to 1.

To indicate a request for transmission of a TWT information frame containing the following TWT field (where the length of the TWT information frame is not 0), the value of the Next TWT subfield may be set to 1. Otherwise, the value of the Next TWT subfield may be set to 0.

The Next TWT Subfield Size subfield may indicate the size of the next TWT subfield. When the size of the next TWT subfield is 0/32/48/64 bits, the value of the Next TWT Subfield Size subfield may be set to 0/1/2/3.

All TWT subfield values may be set to 1 by a HE STA, which may mean that the TWT information frame has re-aligned all TWTs. Otherwise, all TWT subfield values may be set to 0.

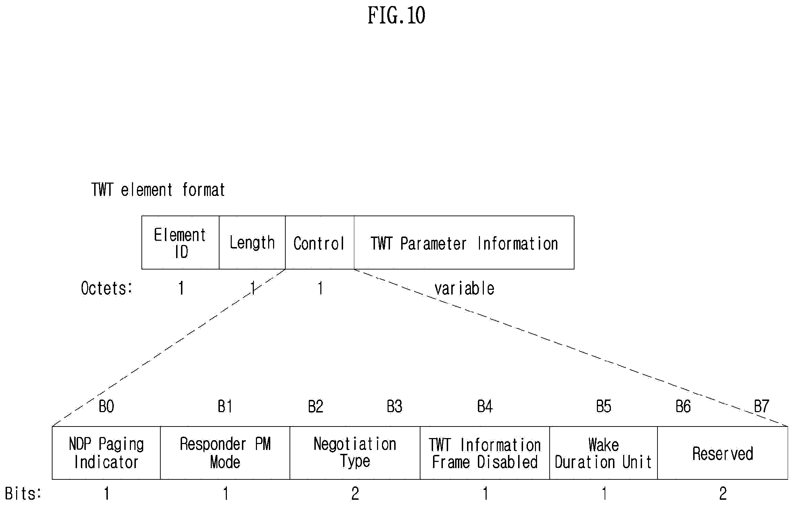

FIG. 10 is a diagram for describing an example of the TWT information element format.

TWT elements may be transmitted and received by being included in beacons, probe responses, (re)combined response frames, etc. The TWT element may include an element ID field, a length field, a control field, and a TWT parameter information field.

The control field of the TWT element has the same format regardless of individual TWT and broadcast TWT.

The NDP paging indication subfield may have a value of 1 if the NDP paging field exists, and may have a value of 0 if the NDP paging field does not exist.

The responder PM mode subfield may indicate a power management (PM) mode.

The negotiation type subfield may indicate whether the information included in the TWT element is about negotiation of parameters of broadcast TWT or individual TWT(s), or about wake TBTT interval.

For example, if the value of the negotiation type subfield is 0, the TWT subfield is for the future individual TWT SP start time, and the TWT element contains one individual TWT parameter set. This may correspond to individual TWT negotiation between the TWT requesting STA and the TWT responding STA, or to individual TWT announcement by the TWT responder.

For example, if the value of the negotiation type subfield is 1, the TWT subfield is for the next TBTT time, and the TWT element contains one individual TWT parameter set. This may correspond to wake TBTT and wake interval negotiation between a TWT scheduled STA and a TWT scheduled AP.

For example, if the value of the negotiation type subfield is 2, the TWT subfield is for the future broadcast TWT SP start time, and the TWT element includes one or more broadcast TWT parameter sets. This may correspond to providing a broadcast TWT schedule to the TWT scheduled STA by including a TWT element in the broadcast management frame transmitted by the TWT scheduling AP.

For example, if the value of the negotiation type subfield is 3, the TWT subfield is for the future broadcast TWT SP start time, and the TWT element includes one or more broadcast TWT parameter sets. This may correspond to managing membership in the broadcast TWT schedule by including a TWT element in an individually addressed management frame transmitted by either a TWT-scheduled STA or a TWT-scheduled AP.

If the TWT information frame disabled subfield is set to 1, it indicates that reception of the TWT information frame by the STA is disabled; otherwise, it may be set to 0.

The wake duration unit subfield indicates the unit of the nominal minimum TWT wake duration field. The wake duration unit subfield may be set to 0 when the unit is 256us, and may be set to 1 when the unit is TU. If it is not a HE/EHT STA, the wake duration unit subfield may be set to 0.

The most significant bit (MSB) of the negotiation type field may correspond to the broadcast field. If the broadcast field is 1, one or more broadcast TWT parameter sets may be included in the TWT element. If the broadcast field is 0, only one individual TWT parameter set can be included in the TWT element. A TWT element with the broadcast field set to 1 may be referred to as a broadcast TWT element.

Also, FIG. 10 shows a case where the reserved field consists of 2 bits, but this is only an example. For example, the TWT element may include a Link ID bitmap present field (e.g., 1 bit) and a reserved field (e.g., 1 bit).

For example, if the link ID bitmap presence field is set to 1, the link ID bitmap subfield is set to exist in the individual TWT parameter set field format to be described later, and if the link ID bitmap presence field is set to 0, the link ID bitmap subfield may be set not to exist in the individual TWT parameter set field format.

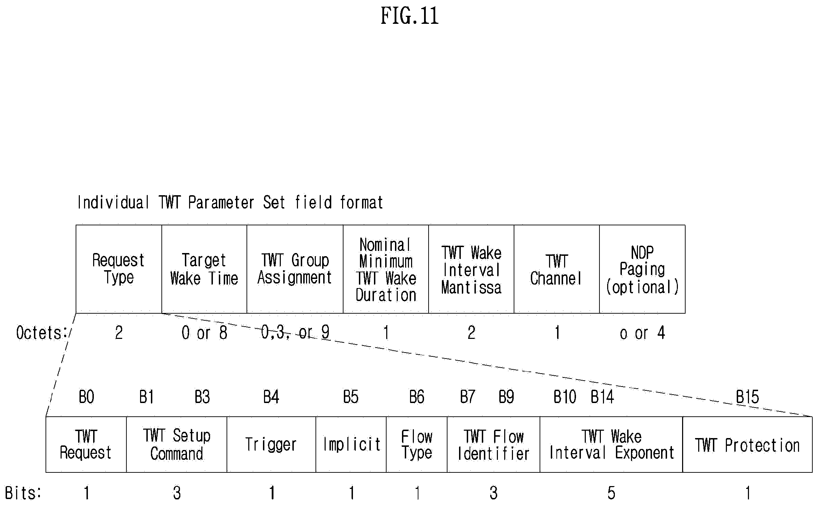

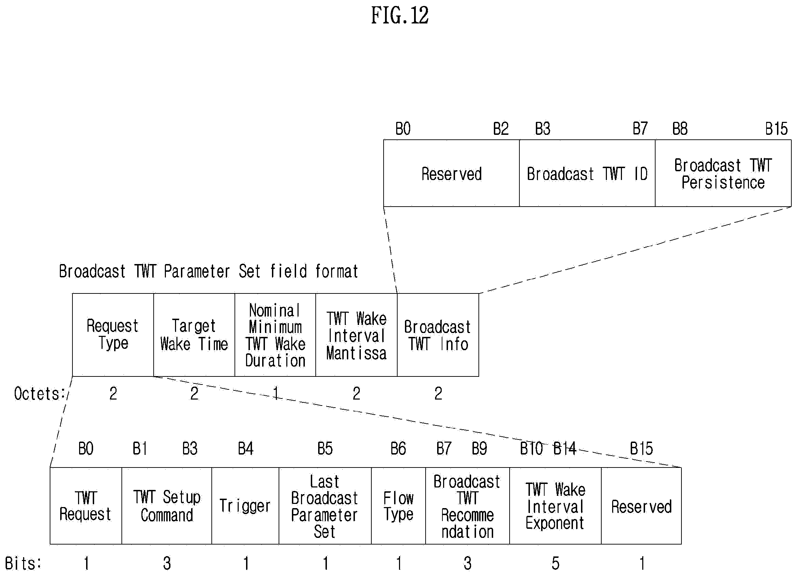

FIG. 11 is a diagram for describing examples of individual TWT parameter set field formats. FIG. 12 is a diagram for describing examples of the broadcast TWT parameter set field format.

The TWT parameter information field included in the TWT element of FIG. 10 may have a different configuration depending on individual TWT or broadcast TWT.

In the case of an individual TWT, the TWT parameter information field within the TWT element includes a single individual TWT parameter set field.

In the case of broadcast TWT, the TWT parameter information field in the TWT element includes one or more broadcast TWT parameter set fields. Each broadcast TWT parameter set may include specific information about one broadcast TWT.

As shown in FIGS. 11 and 12, the individual TWT parameter set field and the broadcast TWT parameter set field include common subfields.

The request type subfield has the same size in the individual TWT parameter set field and the broadcast TWT parameter set field, but the detailed configuration may be configured differently. This will be described later.

The target wake time subfield indicates the start time of the individual/broadcast TWT SP scheduled in the future.

The nominal maximum TWT wake duration subfield indicates the minimum unit that the TWT requesting STA is expected to wake up to complete the frame exchange associated with the TWT flow identifier during the TWT wake interval duration. Here, the TWT wake interval may mean the average time between consecutive TWT SPs expected by the TWT requesting STA.

The TWT Wake Interval Mantissa subfield is the binary value of the TWT wake interval value, which can be expressed in microseconds.

Referring to FIG. 11, the TWT group assignment subfield, TWT channel, and NDP paging subfield are included only in the individual TWT parameter set field.

The TWT group allocation subfield includes information about the TWT group to which the STA is assigned and provides it to the TWT requesting STA. The TWT value within the TWT group may be calculated using the corresponding information. The TWT value of the STA may be equal to the value of the zero offset and the value of the TWT unit multiplied by the value of the TWT offset.

Here, the TWT group information may include a TWT group ID subfield, a zero offset presence subfield, a group zero offset subfield, a TWT unit subfield, and a TWT offset subfield.

The TWT Group ID subfield may indicate the identifier of the TWT group to which the requesting STA is allocated, and a TWT group may mean a group of STAs having a TWT value within a specific interval of TSF values. If the TWT Group ID subfield value is set to 0, it may indicate a unique TWT group that includes all STAs of the BSS.

The zero offset presence subfield may indicate whether a zero offset subfield of the group exists. For example, if the zero offset presence subfield value is set to 1, it may indicate that a zero offset subfield of the group exists. If the zero offset presence subfield value is set to 0, it may indicate that a zero offset subfield of the group does not exist.

The zero offset subfield of the group is optional and may indicate the initial TWT value of a TWT group identified by the TWT group ID.

The TWT Unit subfield may indicate the increment unit of the TWT value within a TWT group identified by the TWT Group ID. For example, if the TWT Unit time values are 32µs, 256µs, 1024µs, 8.192ms, 32.768ms, and 262.144ms, respectively, the TWT Unit subfield values may be expressed as 0, 1, 2, 3, and 4, respectively.

The TWT offset subfield may indicate the position within a specified group of an STA corresponding to the RA of a frame including a TWT element.

The TWT channel subfield represents a bitmap indicating allowed channels. When transmitted by a TWT requesting STA, the TWT channel subfield may include a bitmap indicating the channel that the STA requests to use as a temporary basic channel during the TWT SP. When transmitted by the TWT response STA, the TWT channel subfield may include a bitmap indicating the channel on which the TWT request is allowed.

The NDP paging subfield is optional and may include the identifier of the STA being paged, information related to the maximum number of TWT wake intervals between NDP paging frames, etc.

Referring to FIG. 12, the broadcast TWT information (broadcast TWT info) subfield is included only in the broadcast TWT parameter set field. The broadcast TWT information subfield may include a 3-bit reservation bit, a 5-bit broadcast TWT identifier (ID) subfield, and an 8-bit broadcast TWT persistence subfield. The broadcast TWT identifier subfield indicates the broadcast ID of a specific broadcast TWT in which the STA requests participation or provides TWT parameters, depending on the value of the TWT setup command subfield of the TWT element. The broadcast TWT persistence subfield indicates the number of TBTTs planned on the schedule of the broadcast TWT.

Next, the detailed configuration of the request type subfield will be described.

First, referring to FIG. 11, the format of the request type subfield of the individual TWT parameter set field will be described.

The TWT request subfield may indicate whether it is a requesting STA or a responding STA. If the value is 1, it may indicate that it is a TWT requesting STA or a scheduling STA, and if the value is 0, it may indicate that it is a TWT responding STA or a scheduling AP.

The TWT setup command subfield may indicate commands such as Request, Suggest, Demand, Accept, Alternate, Dictate, Reject.

The trigger subfield indicates whether to use a trigger frame in TWT SP. If the value is 1, the trigger may be used, and if the value is 0, the trigger may not be used.

The implicit subfield may indicate whether it is an implicit TWT or an explicit TWT. If the value is 1, it may indicate implicit TWT, and if it is 0, it may indicate explicit TWT.

The flow type subfield may indicate the interaction type between the TWT requesting STA (or TWT scheduling STA) and the TWT responding STA (or TWT scheduling AP). If the value is 1, it may mean an announced TWT in which the STA sends a wakeup signal to the AP by transmitting a PS-Poll or APSD (automatic power save delivery) trigger frame before a frame other than a trigger frame is transmitted from the AP to the STA. If the value is 0, it may mean an unannounced TWT.

The TWT flow identifier subfield may include a 3-bit value that uniquely identifies specific information for the TWT request in other requests made between the same TWT request STA and TWT response STA pair.

The TWT wake interval exponent subfield may set the TWT wake interval value in binary microsecond units. In the case of individual TWT, this may mean the gap between individual TWT SPs. The TWT wake interval of the requesting STA may be defined as [TWT Wake Interval Mantissa * 2 * TWT Wake Interval Exponent].

The TWT protection subfield may indicate whether to use the TWT protection mechanism. If the value is 1, TXOP in the TWT SP may be initiated with a NAV protection mechanism such as (MU)RTS/CTS or CTS-to-self frame, and if the value is 0, the NAV protection mechanism may not be applied.

Referring to FIG. 12, some of the subfields of the request type subfield of the broadcast TWT parameter set field are common with the subfields of the request type subfield of the individual TWT parameter set field, so description thereof is omitted. Subfields included only in the broadcast TWT parameter set are described below.

The Last Broadcast Parameter Set subfield indicates whether it is the last broadcast TWT parameter set. If the value is 1, it may indicate that it is the last broadcast TWT parameter set, and if the value is 0, it may indicate that the next broadcast TWT parameter set exists.

The broadcast TWT recommendation subfield may indicate recommendations for the frame type transmitted by the AP during the broadcast TWT SP with a value of 1-7.

For example, when the broadcast TWT recommendation subfield value is set to 4, the corresponding broadcast TWT SP may be referred to as an r-TWT SP. That is, the broadcast TWT parameter set in which the broadcast TWT recommendation subfield value is set to 4 can be referred to as a restricted TWT parameter set. Here, during the r-TWT SP, the AP and member r-TWT scheduled STAs can specify transmission priorities of QoS data frames, which are delay-sensitive traffic. And, a broadcast TWT element including only an r-TWT parameter set field can be referred to as a restricted TWT element.

The last bit of the Request Type subfield of the Broadcast TWT Parameter Set field may be reserved.

As an example of the present disclosure, the broadcast TWT parameter set field may include a restricted TWT traffic information (info) subfield. As an example, the TWT traffic information subfield may follow the broadcast TWT info field of the broadcast TWT parameter set field as illustrated in FIG. 12.

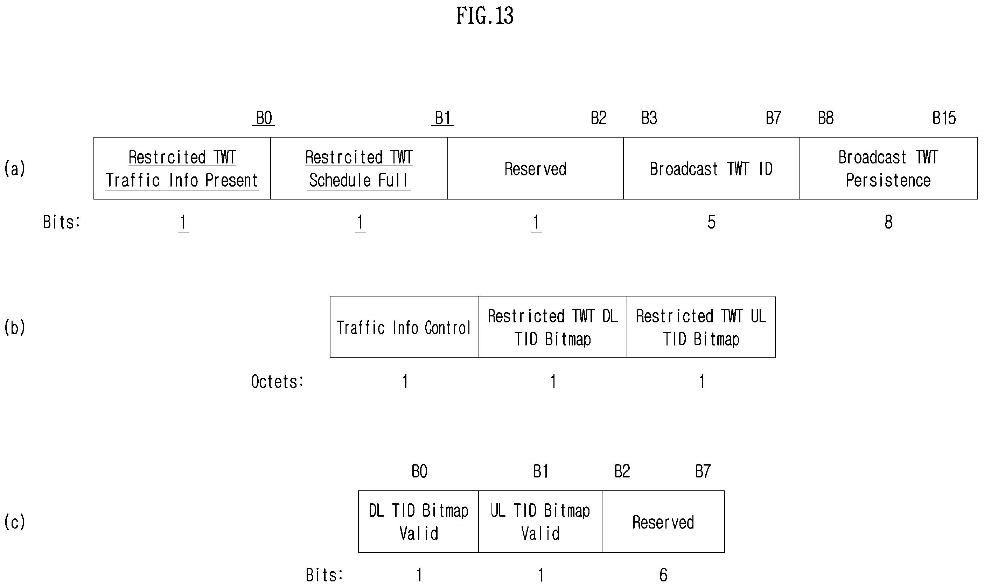

As an example of the present disclosure, as illustrated in (a) of FIG. 13, the broadcast TWT information subfield may include a restricted TWT traffic information presence subfield and a restricted TWT schedule full subfield.

The TWT Traffic Information Presence subfield and the restricted TWT Schedule Full subfield may be set in the first bit (B0) and the second bit (B1) of the broadcast TWT information field as illustrated in FIG. 12, respectively.

For example, if the restricted TWT traffic information field is present on the broadcast TWT parameter set field, the restricted TWT traffic information presence subfield value of the restricted TWT parameter set field may be set to 1. Otherwise, the restricted TWT traffic information presence subfield value may be set to 0. For non-EHT STAs, the restricted TWT traffic information presence subfield may be reserved.

If the Restricted TWT Schedule Full subfield value is set to 1, it may indicate that the r-TWT scheduling AP is unlikely to accept a request from a STA of the BSS to establish a new membership in that schedule. Otherwise, the Restricted TWT Schedule Full subfield value may be set to 0.

The Restricted TWT Schedule Full subfield may be valid if the Restricted TWT Parameter Set field is carried in a TWT element with the Negotiation Type subfield set to 2 and the TWT element is transmitted by an EHT AP.

If the Restricted TWT Traffic Information Presence subfield value of the Broadcast TWT Information subfield is set to 1, the Restricted TWT Traffic Information field may be present in the Restricted TWT Parameter Set field.

As illustrated in (b) of FIG. 13, the restricted TWT traffic information field may include a traffic information control subfield, a restricted TWT DL TID bitmap subfield, and a restricted TWT UL TID bitmap subfield.

As illustrated in (c) of FIG. 13, the traffic information control field may include a DL TID bitmap valid subfield and a UL TID bitmap valid subfield.

The DL TID Bitmap Valid subfield may be set to 1 to indicate that the restricted TWT DL TID bitmap field is valid. The DL TID Bitmap Valid subfield may be set to 0 to indicate that DL traffic of all TIDs mapped to the DL for a link for which r-TWT membership is established is identified as delay sensitive traffic and the restricted TWT DL TID bitmap field is reserved.

The UL TID Bitmap Valid subfield can be set to 1 to indicate that the restricted TWT UL TID bitmap field is valid. The UL TID Bitmap Valid subfield can be set to 0 to indicate that UL traffic of all TIDs mapped to the UL for a link for which r-TWT membership is established is identified as delay sensitive traffic and the restricted TWT UL TID bitmap field is reserved.

The Restricted TWT DL TID Bitmap and Restricted TWT UL TID Bitmap subfields may specify TIDs identified as delay sensitive traffic streams in DL and UL directions, respectively, by an r-TWT scheduling AP or an R-TWT scheduling STA.

A value of 1 at bit position k in the bitmap may indicate that TID k is classified as a delay-sensitive traffic stream. A value of 0 at bit position k in the bitmap may indicate that TID k is not classified as a delay-sensitive traffic stream.

### Method of supporting P2P transmission of delay-sensitive traffic

As wired/wireless traffic has recently exploded, traffic sensitive to latency has also increased significantly. Traffic sensitive to latency includes real-time audio/video transmission, and with the proliferation of multimedia devices, the need to support this in a wireless environment has increased. However, compared to a wired environment, there are many things to consider in a wireless environment to support latency-sensitive traffic. This is because the transmission speed in a wireless environment is lower than that in a wired environment, and interference issues from the surroundings must also be considered. In particular, in a wireless LAN system, multiple STAs must compete equally for medium occupancy in the ISM (Industry-Science-Medical) band, so it is relatively more difficult to support latency-sensitive traffic compared to a cellular communication network based on radio resource scheduling by a central base station. This disclosure describes a new method for supporting latency-sensitive traffic in a wireless LAN system.

Additionally, in the present disclosure, a non-AP STA that supports transmission of latency sensitive data may be referred to as a low latency STA. And, data other than latency-sensitive data may be referred to as regular data.

Here, a general STA may support transmission of delay-sensitive traffic/data, and a low latency STA may support transmission of general traffic/data.

In order to allocate time for P2P data transmission and reception between STAs in a wireless LAN system, an AP may transmit a MU (multi-user)-RTS (request to send) TXS trigger frame to the corresponding STA(s). In addition, each STA may be allocated r-TWT SPs, which are times that guarantee transmission and reception of delay-sensitive traffic, from the AP.

In basic wireless communication systems, procedures and related protocols for transmitting and receiving delay-sensitive traffic in a P2P manner within an r-TWT SP have not been defined, and thus, the need for a method for efficiently transmitting delay-sensitive traffic has arisen.

Hereinafter, a method for requesting and allocating an r-TWT SP capable of P2P transmission is described in order to allocate time used when transmitting and receiving delay-sensitive traffic between STAs.

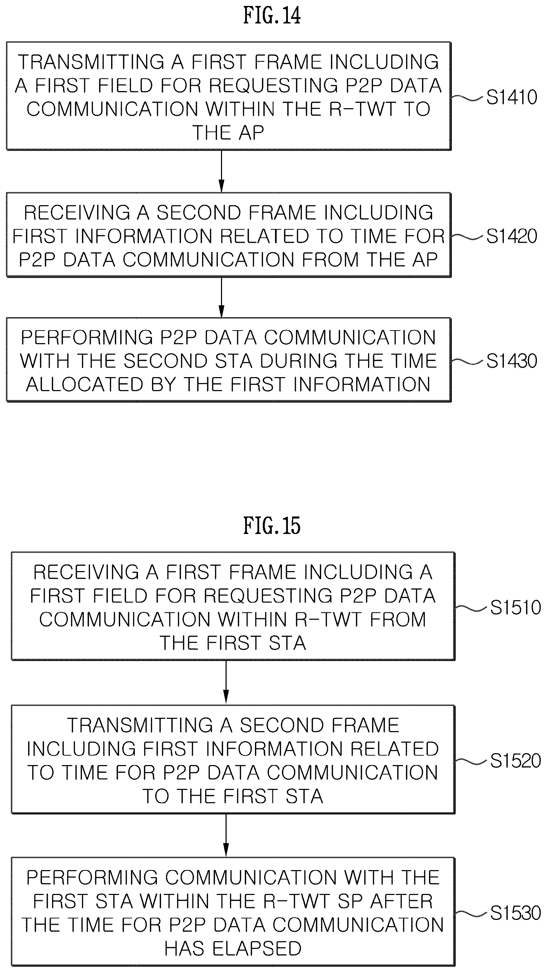

FIG. 14 is a flowchart for describing the operation of a first STA according to one embodiment of the present disclosure.

The first STA may transmit a first frame including a first field for requesting P2P data communication within the r-TWT to the AP (S1410).

Specifically, the first STA may transmit a first frame (e.g., a TWT setup frame including a broadcast TWT parameter set field) to the AP to request setup of a TWT service period (SP).

Here, the first field (e.g., a P2P in restricted TWT SP subfield) may be included in a restricted TWT traffic info control subfield included in a restricted TWT traffic info subfield of the broadcast TWT parameter set field.

For example, the first field may be set on one of the bits of the third bit (B2) to the eighth bit (B7) of the TWT traffic information control subfield.

The first STA may receive a third frame from the AP in response to the first frame. That is, the first STA may receive a third frame, which is a response frame to the setup request of the TWT SP, from the AP.

The third frame may include a TWT setup command field and a first field for accepting a TWT request according to the first frame. That is, the third frame may include a first field that is identical to the first field included in the first frame.

Here, the first field included in the third frame may also be set on the restricted TWT traffic information control subfield included in the restricted traffic information subfield of the broadcast TWT parameter set field. In addition, the value of the TWT setup command field may be set to 4, and the values of the first field included in the first frame and the first field included in the third frame may each be set to 1.

The first STA may receive a second frame including first information related to time for P2P data communication from the AP (S1420).

For example, the second frame may be a multi-user (MU) request to send (RTS) TXS trigger frame. The MU RTS TXS frame may be transmitted from the AP to the first STA within the r-TWT SP, and the r-TWT SP may be set based on the first frame and the third frame.

And, the first information may include information related to time allocated for P2P data communication within the r-TWT SP. The time allocated by the first information may be within the r-TWT SP.

The first STA may perform P2P data communication with the second STA during the time allocated by the first information (S1430).

For example, latency sensitive traffic may be transmitted and received between the first STA and the second STA via P2P data communication. However, this is only one embodiment, and general data may also be transmitted and received between the first STA and the second STA via P2P data communication.

Here, after the time for P2P data communication has elapsed, the first STA may perform communication (e.g., delay-sensitive traffic transmission/reception operation, etc.) with the AP within the r-TWT SP. That is, the first STA may perform communication with the AP until the time for P2P data communication has elapsed and the r-TWT SP expires.

The method performed by the first STA described in the example of FIG. 14 may be performed by the first device (100) of FIG. 1. For example, one or more processors (102) of the first device (100) of FIG. 14 may transmit a first frame including a first field for requesting P2P data communication within an r-TWT to an AP via one or more transceivers (106). The one or more processors (102) may receive a second frame including first information related to a time for P2P data communication from the AP via one or more transceivers (106). The one or more processors (102) may perform communication with the first STA within an r-TWT SP after the time for P2P data communication has elapsed.

Furthermore, one or more memories (104) of the first device (100) may store instructions for performing the method described in the example of FIG. 14 when executed by one or more processors (102).

FIG. 15 is a diagram for describing the operation of an AP according to one embodiment of the present disclosure.

The AP may receive a first frame including a first field for requesting P2P data communication within r-TWT from the first STA (S1510) .

The AP may transmit a third frame to the first STA in response to the first frame requesting TWT SP.

As described above, the third frame may include a TWT setup command field and a first field that approves a TWT request according to the first frame. That is, the third frame may include a first field that is identical to the first field included in the first frame.

The AP may transmit a second frame including first information related to time for P2P data communication to the first STA (S1520).

That is, the AP may allocate time to the first STA to perform P2P data communication within the r-TWT SP through the second frame.

The AP may perform communication with the first STA within the r-TWT SP after the time for P2P data communication has elapsed (S1530).

That is, the AP may communicate with the first STA until the time for P2P data communication elapses and the r-TWT SP expires.

The method performed by the AP described in the example of FIG. 15 may be performed by the second device (200) of FIG. 1. For example, one or more processors (202) of the second device (200) of FIG. 1 may receive a first frame including a first field for requesting P2P data communication within an r-TWT from a first STA through one or more transceivers (206). The one or more processors (202) may transmit a second frame including first information related to a time for P2P data communication to the first STA through one or more transceivers (206). The one or more processors (202) may perform communication with the first STA within an r-TWT SP after the time for P2P data communication has elapsed.

Furthermore, one or more memories (204) of the second device (200) may store instructions for performing the method described in the example of FIG. 15 when executed by one or more processors (202).

Hereinafter, the TWT elements and P2P transmission procedures for performing P2P transmission within the r-TWT SP are specifically described.

### Embodiment 1

STA may request and/or respond to P2P data transmission and reception during r-TWT SP through a new field in the TWT element. The new field may be referred to as a P2P (P2P in restricted TWT SP) (sub)field in r-TWT SP, but is not limited thereto, and the name of the new field can be changed in various ways. In addition, STA in the present disclosure can include non-AP STA and AP STA.

In the TWT negotiation phase, a TWT requesting STA may request a TWT responding STA to perform transmission and reception of (some or all) data during the r-TWT SP allocated by the TWT responding STA in a P2P manner (i.e., P2P communication).

When a TWT requesting STA requests to perform data transmission and reception in a P2P manner during an r-TWT SP, the value of the P2P subfield in the r-TWT SP may be set to 1. When the value of the P2P subfield in the r-TWT SP is set to 1, this may mean that the STA (e.g., AP) is requested to allocate time for P2P data transmission and reception within the r-TWT SP allocated through TWT negotiation. When the value of the P2P subfield in the r-TWT SP is set to 0, this may mean that the STA (e.g., AP) is not requested to allocate time for P2P data transmission and reception within the r-TWT SP allocated through TWT negotiation.

However, even if the TWT requesting STA does not request/request time allocation for P2P through the value of the P2P subfield in the r-TWT SP, the AP may allocate/request time for P2P data transmission and reception in the r-TWT SP based on P2P-related information among the information related to delay-sensitive traffic exchanged with the STA in advance.

When approving a request of a TWT requesting STA (i.e., a request related to P2P transmission within an r-TWT SP), a TWT responding STA may set a value corresponding to the request approval in the TWT setup command field. Then, the TWT responding STA may set a value of a P2P subfield within the r-TWT SP to be identical to a value of a P2P subfield within the r-TWT SP within the TWT element transmitted by the TWT requesting STA, and transmit it to the TWT requesting STA.

When rejecting a request from a TWT requesting STA (i.e., a request related to P2P transmission within an r-TWT SP), a TWT responding STA may set a value corresponding to the request rejection in the TWT setup command field. Then, the TWT responding STA may set the value of the P2P subfield within the r-TWT SP to 0 and transmit it to the TWT requesting STA.

### Embodiment 2

Embodiment 2 relates to a method for allocating time for P2P data transmission within an r-TWT SP.

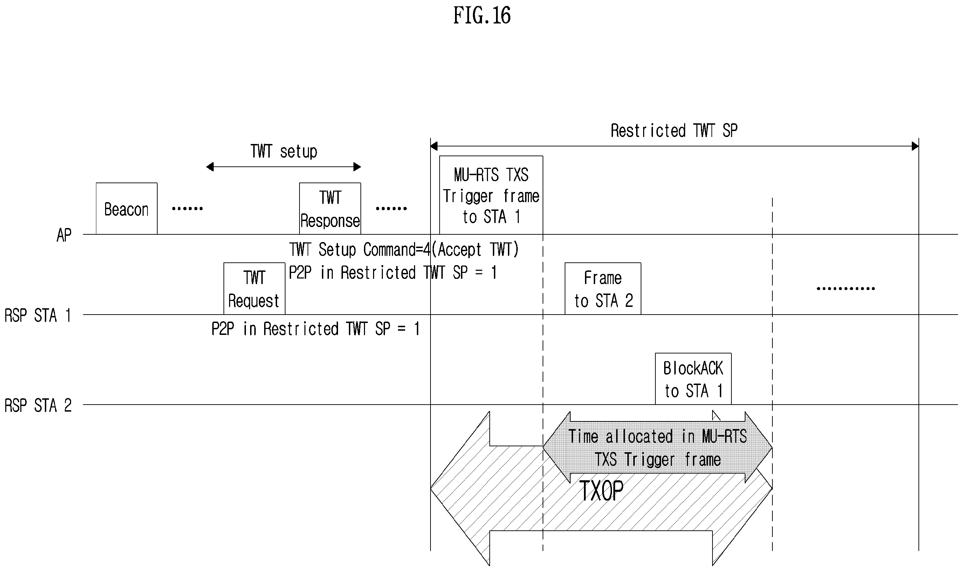

As one embodiment of the present disclosure, FIG. 16 illustrates a procedure in which a TWT requesting STA requests P2P data transmission and reception in an r-TWT SP using a P2P subfield in the r-TWT SP and then receives time allocated for P2P data transmission and reception from a TWT responding STA.

As illustrated in FIG. 16, RSP (restricted supported) STA 1 may set the P2P subfield value in the r-TWT SP included in the TWT element to 1 and then transmit it to the AP. Here, RSP STA 1 means a TWT requesting STA and may be a non-AP STA or an AP. In addition, the P2P subfield in the r-TWT SP may be included in a frame for requesting TWT.

By setting the P2P subfield value in the r-TWT SP to 1, RSP STA 1 may request the AP to perform P2P data transmission and reception with another RSP STA (e.g., RSP STA 2) in the r-TWT SP.

The AP may set the value of the TWT Setup Command field to 4 and the value of the P2P subfield in the r-TWT SP to 1 (i.e., the same value as the value of the P2P subfield in the r-TWT SP set by the RSP STA 1). The AP may respond to the request of the RSP STA 1 by transmitting the TWT Setup Command field set to 4 and the value of the P2P subfield in the r-TWT SP set to 1 to the RSP STA 1.

Accordingly, RSP STA 1 may be allocated an r-TWT SP from the AP. After the r-TWT SP starts, the AP may allocate time for P2P communication via the MU-RTS TXS trigger frame. The AP may transmit the MU-RTS TXS trigger frame to RSP STA 1 immediately after the r-TWT SP starts, but is not limited thereto. The AP may transmit the MU-RTS TXS trigger frame to RSP STA 1 after a predefined time after the r-TWT SP starts.

As illustrated in FIG. 16, RSP STA 1 may perform P2P data transmission and reception operations with RSP STA 2 during the time allocated by the MU-RTS TXS trigger frame. Here, the P2P data may be delay-sensitive data, but is not limited thereto.

After the time allocated by the MU-RTS TXS trigger frame has elapsed, RSP STA 1 may transmit and receive data with the AP.

### Embodiment 3

Embodiment 3 relates to the configuration of a field in which a P2P subfield within an r-TWT SP is set. That is, Embodiment 3 relates to a field including a P2P subfield within an r-TWT SP that indicates P2P data transmission and reception within an r-TWT SP.

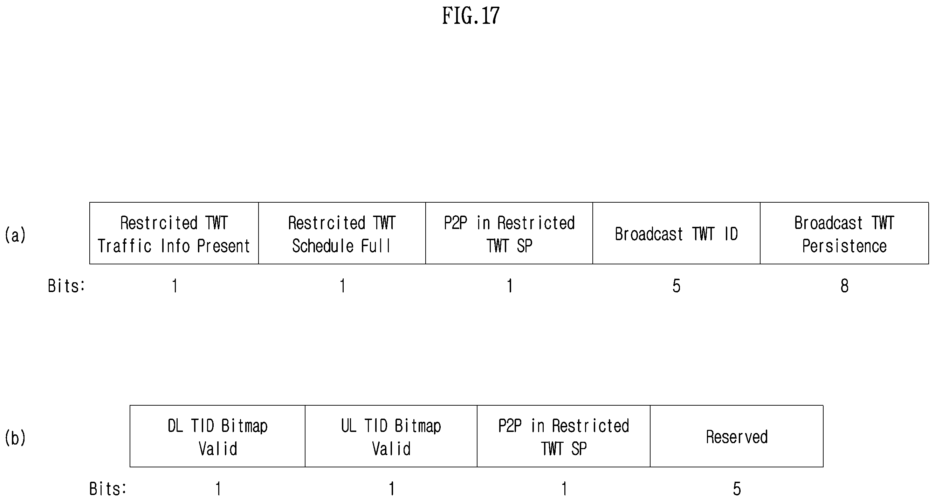

As an example of the present disclosure, as illustrated in (a) of FIG. 17, the P2P subfield within the r-TWT SP may be included in the broadcast TWT information subfield.

For example, the P2P subfield in the r-TWT SP may be set using one bit of the reserved bits included in the broadcast TWT information subfield of the broadcast TWT parameter set field.

As another example of the present disclosure, as illustrated in (b) of FIG. 17, the P2P subfield in the r-TWT SP may be set on the traffic information control field included in the restricted TWT traffic info subfield of the broadcast TWT parameter set field.

For example, a 1-octet traffic info control field may exist in the restricted TWT traffic information field. A P2P subfield in the r-TWT SP may be set using 1 bit out of the 6 reserved bits of the traffic information control field of the restricted TWT traffic information field.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a highspeed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless LAN system, the method comprising:
transmitting a first frame including a first field for requesting peer-to-peer (P2P) data communication within a restricted-target wake time (r-TWT) to an access point (AP);
receiving a second frame including first information related to a time for P2P data communication from the AP; and
performing the P2P data communication with a second STA during a time allocated by the first information,
wherein the time allocated by the first information is within a r-TWT service period (SP).

2. The method of claim 1, wherein:
the first field is included in a restricted TWT traffic information control subfield included in a restricted TWT traffic information (info) subfield of a broadcast TWT parameter set field.

3. The method of claim 2, wherein:
the first field is set on one of bits of a third bit (B2) to a eighth bit (B7) of the TWT traffic information control subfield.

4. The method of claim 2, wherein:
the first frame is a TWT setup frame including the broadcast TWT parameter set, and
the second frame is a multi-user (MU) request to send (RTS) TXS trigger frame.

5. The method of claim 1, wherein:
a third frame responding to the first frame is received from the AP, and
the third frame including a TWT setup command field for accepting a TWT request according to the first frame and the first field.

6. The method of claim 5, wherein:
a value of the TWT setup command field is set to 4, and
a value of each of a first field included in the first frame and a first field included in the third frame is set to 1.

7. The method of claim 5, wherein:
the r-TWT SP is set based on the first frame and the third frame, and
the MU RTS trigger frame is received from the AP within the r-TWT SP.

8. The method of claim 1, wherein:
through the P2P data communication, latency sensitive traffic is transmitted and received between the first STA and the second STA.

9. The method of claim 1, wherein:
after a time for the P2P data communication has elapsed, communication with the AP is performed within the r-TWT SP.

10. A first station (STA) performed in a wireless LAN system, the first STA comprising:
at least one transceiver; and
at least one processor connected to the at least one transceiver,
wherein the at least one processor is configured to:
transmit a first frame including a first field for requesting peer-to-peer (P2P) data communication within a restricted-target wake time (r-TWT) to an access point (AP) through the at least one transceiver;
receive a second frame including first information related to a time for P2P data communication from the AP through the at least one transceiver; and
perform the P2P data communication with a second STA during a time allocated by the first information through the at least one transceiver,
wherein the time allocated by the first information is within a r-TWT service period (SP).

11. A method performed by an access point (AP) in a wireless LAN system, the method comprising:
receiving a first frame including a first field for requesting peer-to-peer (P2P) data communication within a restricted-target wake time (r-TWT) from a first station (STA);
transmitting a second frame including first information related to a time for P2P data communication to the first STA; and
performing communication with the first STA within an r-TWT service period (SP) after the time for P2P data communication has elapsed,
wherein a time allocated by the first information is within a r-TWT service period (SP).

12. An access point (AP) performed in a wireless LAN system, the AP comprising:
at least one transceiver; and
at least one processor connected to the at least one transceiver,
wherein the at least one processor is configured to:
receive a first frame including a first field for requesting peer-to-peer (P2P) data communication within a restricted-target wake time (r-TWT) from a first station (STA) through the at least one transceiver;
transmit a second frame including first information related to a time for P2P data communication to the first STA through the at least one transceiver; and
perform communication with the first STA within an r-TWT service period (SP) after the time for P2P data communication has elapsed,
wherein a time allocated by the first information is within a r-TWT service period (SP).

13. A processing device configured to control a first station (STA) in a wireless LAN system, the processing device comprising:
at least one processor; and
at least one computer memory operatively coupled to the at least one processor and storing instructions for performing operations upon being executed by the at least one processor;
the operations include:
transmitting a first frame including a first field for requesting peer-to-peer (P2P) data communication within a restricted-target wake time (r-TWT) to an access point (AP);
receiving a second frame including first information related to a time for P2P data communication from the AP; and
performing the P2P data communication with a second STA during a time allocated by the first information,
wherein the time allocated by the first information is within a r-TWT service period (SP).

14. At least one non-transitory computer readable medium storing at least one instruction,
based on the at least one instruction being executed by at least one processor, an apparatus for performing communication in a wireless LAN system controls to:
transmit a first frame including a first field for requesting peer-to-peer (P2P) data communication within a restricted-target wake time (r-TWT) to an access point (AP);
receive a second frame including first information related to a time for P2P data communication from the AP; and
perform the P2P data communication with a second STA during a time allocated by the first information,
wherein the time allocated by the first information is within a r-TWT service period (SP).
